# EUROPEAN PATENT APPLICATION

(11) **EP 4 120 170 A1**
(43) Date of publication of application: **18.01.2023**
(21) Application number: 22171923.0
(22) Date of filing: 05.05.2022
(51) Int. Cl.: G06Q 30/02, G06Q 50/00

(54) **METHOD AND APPARATUS FOR DISPLAYING RESOURCES**

(30) Priority: 15.07.2021 CN 202110801009
(71) Applicant: Beijing Dajia Internet Information Technology Co., Ltd., Beijing 100085 (CN)
(72) Inventor: ZHANG, Gan, Beijing, 100085 (CN); LI, Yinhui, Beijing, 100085 (CN); ZHANG, Yimeng, Beijing, 100085 (CN); ZHAO, Na, Beijing, 100085 (CN); ZHAI, Li, Beijing, 100085 (CN); GAO, Xinyue, Beijing, 100085 (CN)
(74) Representative: Yang, Shu

(57) **Abstract**

A method and an apparatus for displaying resources related to the field of Internet technologies are provided. The method includes: displaying (201; 401) a multimedia resource of a target activity in an initialization page of an application in response to a launch operation on the application; displaying (202; 402) a target account in the initialization page; and sending (203; 403) an invitation request to a server based on the target account to trigger the server to send invitation information to a second terminal corresponding to the target account, so as to invite the target account to participate in the target activity.

## Description

### TECHNICAL FIELD

The present disclosure relates to the field of Internet technologies, and in particular, relates to a method and an apparatus for displaying resources.

### BACKGROUND

With the rapid development of computer technologies and mobile Internet, various types of applications such as live-streaming applications, social media applications and shopping applications have been developed and are used by many people. In some configurations of the applications, when a user starts an application, a terminal is triggered to display a screen-opening resource preset by the application in an initialization page. The screen-opening resource may be a screen-opening advertisement. The screen-opening resource is typically displayed with information related to the resource itself and the displayed content such as advertisement is often ignored by the user.

### SUMMARY

The present disclosure provides a method for displaying resources and a computer device.

According to an aspect of embodiments of the present disclosure, a method for displaying resources is provided and performed by a first terminal. The method includes: displaying a multimedia resource of a target activity in an initialization page of an application in response to a launch operation on the application; displaying a target account in the initialization page; and sending an invitation request to a server based on the target account, wherein the invitation request is configured to trigger the server to send invitation information to a second terminal corresponding to the target account, and the invitation information is configured to invite the target account to participate in the target activity.

In some embodiments, the method further includes: determining, in response to a select operation on at least one account in the initialization page, a selected account as the target account, and displaying the target account.

In some embodiments, in response to the select operation on the at least one account in the initialization page, the selected account as the target account includes: displaying, in response to a rotate operation on the first terminal, the at least one account moving with the rotate operation in the initialization page; and determining, in response to any account being moved to a target region in the initialization page, the account as the target account, wherein the target region is a region where the selected account is disposed.

In some embodiment, determining, in response to any account being moved to the target region in the initialization page, the account as the target account includes: determining the account as the target account in response to a duration of the account in the target region reaching a target duration.

In some embodiments, a target icon is displayed in the initialization page; and determining, in response to the select operation on the at least one account in the initialization page, the selected account as the target account includes: displaying, in response to a drag operation on the target icon, the target icon moving with the drag operation; and determining, in response to the target icon moving to a region where any account is disposed, the account as the target account.

In some embodiments, determining, in response to the target icon moving to the region where any account is disposed, the account as the target account includes: determining the account as the target account in response to the region where the account is active being overlapped with the region where the target icon is displayed.

In some embodiments, a target object is displayed in the initialization page, the target object including the at least one account and a pointing control; and determining, in response to the select operation on the at least one account in the initialization page, the selected account as the target account includes: displaying the pointing control rotating along the target object in response to a long-press operation on the target object; and determining an account pointed to by the pointing control as the target account in response to a release operation on the target object.

In some embodiments, displaying the target account in the initialization page includes at least one of: displaying the target account in the initialization page in response to a shake operation on the first terminal; and displaying the target account in the initialization page in response to a rotate operation on the first terminal.

In some embodiments, the initialization page includes a first invitation control configured to invite the target account to participate in the target activity; and the method further includes: sending the invitation request to the server based on the target account in response to a trigger operation on the first invitation control.

In some embodiments, the method further includes any one of: displaying a content page of the multimedia resource in response to a trigger operation on a blank region in the initialization page; displaying the content page of the multimedia resource in the initialization page in response to the shake operation on the first terminal; and displaying the content page of the multimedia resource in the initialization page in response to the rotate operation on the first terminal.

In some embodiments, the method further includes: automatically displaying a content page of the multimedia resource.

In some embodiments, the method further includes at least one of: displaying the quantity of accounts that have participated in the target activity in the initialization page in a form of dynamic increase; and displaying the quantity of accounts that have given a like to the multimedia resource in the initialization page in a form of dynamic increase.

In some embodiment, the initialization page includes a like control configured to give a like to the multimedia resource; and the method further includes: switching the like control to a resource view control in response to a trigger operation on the like control, wherein the resource view control is designed for viewing the content page of the multimedia resource.

In some embodiments, an apparatus for displaying resources is provided. The apparatus includes: a resource displaying unit, configured to display a multimedia resource of a target activity in an initialization page of an application in response to a launch operation on the application; an account displaying unit, configured to display a target account in the initialization page; and a sending unit, configured to send an invitation request to a server based on the target account, wherein the invitation request is configured to trigger the server to send invitation information to a second terminal corresponding to the target account, and the invitation information is configured to invite the target account to participate in the target activity.

In some embodiments, a non-transitory computer-readable storage medium is provided. The non-transitory computer-readable storage medium includes a program code therein; wherein the program code, when loaded and executed by a processor of a computer device, causes the computer device to: display a multimedia resource of a target activity in an initialization page of an application in response to a launch operation on the application; display a target account in the initialization page; and send an invitation request to a server based on the target account, wherein the invitation request is configured to trigger the server to send invitation information to a second terminal corresponding to the target account, and the invitation information is configured to invite the target account to participate in the target activity.

The technical solution according to the embodiment of the present disclosure provides an interactive method based on the multimedia resource in the initialization page, which enriches the interactive forms of the multimedia resource and improves a display effect of the multimedia resource.

### BRIEF DESCRIPTION OF THE DRAWINGS

FIG. 1 is a schematic diagram of an implementation environment of a method for displaying resources according to an embodiment of the present disclosure;
FIG. 2 is a flowchart of a method for displaying resources according to an embodiment of the present disclosure;
FIG. 3 is a flowchart of a method for displaying resources according to an embodiment of the present disclosure;
FIG. 4 is a flowchart of a method for displaying resources according to an embodiment of the present disclosure;
FIG. 5 is a schematic diagram of an initialization page according to an embodiment of the present disclosure;
FIG. 6 is a schematic diagram of an initialization page according to an embodiment of the present disclosure;
FIG. 7 is a schematic diagram of an initialization page according to an embodiment of the present disclosure;
FIG. 8 is a schematic diagram of an initialization page according to an embodiment of the present disclosure;
FIG. 9 is a schematic diagram of an initialization page according to an embodiment of the present disclosure;
FIG. 10 is a schematic diagram of an initialization page according to an embodiment of the present disclosure;
FIG. 11 is a schematic diagram of an initialization page according to an embodiment of the present disclosure;
FIG. 12 is a schematic diagram of an initialization page according to an embodiment of the present disclosure;
FIG. 13 is a schematic diagram of an initialization page according to an embodiment of the present disclosure;
FIG. 14 is a schematic diagram of an initialization page according to an embodiment of the present disclosure;
FIG. 15 is a schematic diagram of an initialization page according to an embodiment of the present disclosure;
FIG. 16 is a schematic diagram of an initialization page according to an embodiment of the present disclosure;
FIG. 17 is a schematic diagram of an initialization page according to an embodiment of the present disclosure;
FIG. 18 is a schematic diagram of an initialization page according to an embodiment of the present disclosure;
FIG. 19 is a schematic diagram of an initialization page according to an embodiment of the present disclosure;
FIG. 20 is a schematic diagram of an initialization page according to an embodiment of the present disclosure;
FIG. 21 is a schematic diagram of a content page according to an embodiment of the present disclosure;
FIG. 22 is a schematic diagram of an initialization page according to an embodiment of the present disclosure;
FIG. 23 is a block diagram of an apparatus for displaying resources according to an embodiment of the present disclosure;
FIG. 24 is a block diagram of an apparatus for displaying resources according to an embodiment of the present disclosure;
FIG. 25 is a block diagram of a terminal according to an embodiment of the present disclosure; and
FIG. 26 is a block diagram of a server according to an embodiment of the present disclosure.

### DETAILED DESCRIPTION

The data provided in the present disclosure is data authorized by users or fully authorized by all parties. User information and user account-related information, including social relationship identity information and the like, as described in the embodiments of the present disclosure, have been authorized by the users. Under the premise of acquiring the users' permission and authorization, a method, an apparatus, a device and a storage medium involved in the present disclosure can acquire relevant information of the user.

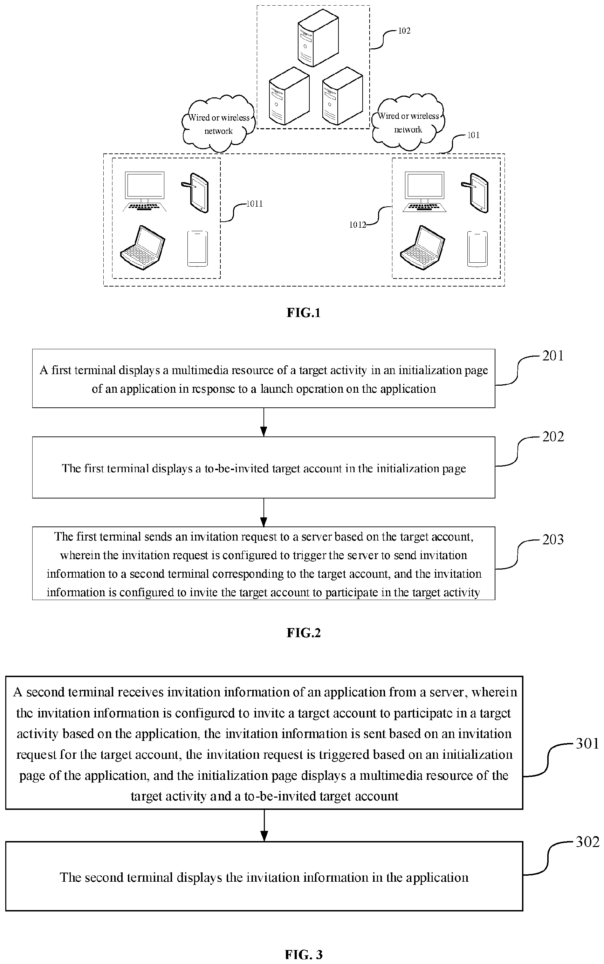

FIG. 1 is a schematic diagram of an implementation environment involved in a method for displaying resources according to an embodiment of the present disclosure. Referring to FIG. 1, the implementation environment includes a terminal 101 and a server 102.

The terminal 101 may be at least one of devices such as a smart phone, a smart watch, a desktop computer, a laptop computer, a virtual reality terminal, an augmented reality terminal, a wireless terminal, and a laptop portable computer. The terminal 101 has a communication function and is capable of accessing a wired network or a wireless network. In some embodiments, the terminal 101 generally refers to one of a plurality of terminals. The embodiment of the present disclosure is illustrated with the terminal 101 only as an example.

In some embodiments, the terminal 101 may run various types of application programs, such as video application programs, live-streaming application programs, shopping application programs and social networking application programs. In the embodiments of the present disclosure, an application program is hereinafter referred to as an application for short.

In the embodiments of the present disclosure, the terminal 101 may include a first terminal 1011 and a second terminal 1012. The first terminal 1011 refers to a terminal corresponding to an invited user. The first terminal 1011 displays a multimedia resource of a target activity in an initialization page of an application in response to a launch operation on the application, displays a to-be-invited target account in the initialization page, and sends an invitation request to the server 102 based on the target account, so as to request to send invitation information to a terminal corresponding to the target account. The second terminal 1012 is a terminal corresponding to an invited user, that is, a terminal corresponding to the target account. The second terminal 1012 is configured to receive the invitation information from the server 102, and then display the invitation information in the application.

The server 102 may be an independent physical server, a server cluster or a distributed file system composed of a plurality of physical servers, or a could server that provides cloud services, cloud databases, cloud computing, cloud functions, cloud storage, network services, cloud communications, middleware services, domain name services, security services, content delivery network (CDN), as well as big data, artificial intelligence platforms and other basic cloud computing services. The server 102 and the terminal 101 may be directly or indirectly connected over wired or wireless communication, which is not limited in the embodiments of the present disclosure. In some embodiments, the server 102 may also include other functional servers to provide more comprehensive and diversified services.

In the embodiment of the present disclosure, the server 102 is a backend server of the above application. The server 102 is configured to provide the multimedia resource of the target activity for the initialization page of the application, and in response to receiving the invitation request for the target account from the first terminal 1011, sends the invitation information to a terminal corresponding to the target account, that is, to the second terminal 1012.

FIG. 2 is a flowchart of a method for displaying resources according to an embodiment of the present disclosure. As shown in FIG. 2, this method is applicable to a computer device. The computer device may be the first terminal shown in FIG. 1. In some embodiments, the method may include the following processes.

In 201, the first terminal displays a multimedia resource of a target activity in an initialization page of an application in response to a launch operation on the application.

In 202, the first terminal displays a to-be-invited target account in the initialization page and the to-be-invited target account is also referred to as a target account in the present disclosure.

In 203, the first terminal sends an invitation request to a server based on the target account, wherein the invitation request is configured to trigger the server to send invitation information to a second terminal corresponding to the target account, and the invitation information is configured to invite the target account to participate in the target activity.

The technical solution according to the embodiment of the present disclosure provides an interaction method based on the multimedia resource in the initialization page. Through the invitation by a first user of the first terminal to a second user of a second terminal, the second user is informed of the target activity and may participate in the target activity. In this way, because of the interactive features of the initialization interface, not only the first user can notice the target activity and become interested in the target activity but the second user also can be caused to pay attention to the target activity and participate the target activity. The technical solution of the present disclosure enriches the interactive forms of the multimedia resource and improves a display effect of the multimedia resource.

In some embodiments, the method further includes: determining, in response to a select operation on at least one account in the initialization page, a selected account as the target account, and displaying the target account.

In some embodiments, determining, in response to the select operation on the at least one account, the selected account as the target account includes: displaying, in response to a rotate operation on the first terminal, the at least one account moving with the rotate operation in the initialization page, and determining, in response to any account being moved to a target region in the initialization page, the account as the target account, wherein the target region is a region where the selected account is disposed.

In some embodiments, determining, in response to any account being moved to the target region in the initialization page, this account as the target account includes: determining the account as the target account in response to the account in the target region reaching a target duration.

In some embodiments, a target icon is displayed in the initialization page. Determining, in response to the select operation on the at least one account in the initialization page, the selected account as the target account includes: displaying, in response to a drag operation on the target icon, the target icon moving with the drag operation, and determining, in response to the target icon moving to a region where any account is disposed, this account as the target account.

In some embodiments, determining, in response to the target icon moving to the region where any account is disposed, the account as the target account includes: determining the account as the target account in response to the region where the account is active being overlapped with the region where the target icon is displayed.

In some embodiments, a target object is displayed in the initialization page, wherein the target object includes the at least one account and a pointing control; and determining, in response to the select operation on the at least one account, the selected account as the target account includes: displaying the pointing control rotating along the target object in response to a long-press operation on the target object, and determining an account pointed to by the pointing control as the target account in response to a release operation on the target object.

In some embodiments, the at least one account is at least one of a friend account of a logged-in account of the first terminal in the application, an account that the logged-in account of the first terminal has followed in the application, an account that has followed the logged-in account of the first terminal in the application, and an account that has followed each other with the logged-in account of the first terminal.

In some embodiments, displaying the to-be-invited target account in the initialization page includes at least one of: displaying the target account in the initialization page in response to a shake operation on the first terminal, and displaying the target account in the initialization page in response to a rotate operation on the first terminal.

In some embodiments, the initialization page includes a first invitation control configured to invite the target account to participate in the target activity; and upon displaying the to-be-invited target account, the method further includes: sending the invitation request to the server based on the target account in response to the trigger operation on the first invitation control.

In some embodiments, the target account is an account recommended by the server; and the account recommended by the server is at least one of an account whose correlation degree with the logged-in account of the first terminal is greater than a correlation degree threshold, and an account that has not participated in the target activity.

In some embodiments, the method further includes any one of: the initialization page further includes first question information, wherein the first question information is configured to initiate a question for the logged-in account of the first terminal to ask other accounts, and the invitation information is configured to invite the target account to answer the question. The initialization page further includes resource information, wherein the resource information is configured to invite the other accounts to receive a virtual resource, and the invitation information is configured to invite the target account to receive the virtual resource, and the initialization information further includes competitive information, wherein the competitive information is configured to invite the other accounts to participate in a competitive activity, and the competitive information is configured to invite the target account to participate in the competitive activity.

In some embodiments, upon sending the invitation request to the server based on the target account, the method further includes: displaying reply information of the target account in response to the target account having answered the question.

In some embodiments, upon displaying the multimedia resource of the target activity in the initialization page of the application, the method further includes any one of: displaying a content page of the multimedia resource in response to a trigger operation on a blank region in the initialization page, displaying the content page of the multimedia resource in the initialization page in response to a shake operation on the first terminal, and displaying the content page of the multimedia resource in the initialization page in response to a rotate operation on the first terminal.

In some embodiments, upon sending the initialization request to the server based on the target account, the method further includes: automatically displaying the content page of the multimedia resource.

In some embodiments, the method further includes at least one of: displaying a quantity of accounts that have participated in the target activity in the initialization page, and displaying a quantity of accounts that have given a like to the multimedia resource in the initialization page.

In some embodiments, the method further includes at least one of: displaying the quantity of accounts that have participated in the target activity in the initialization page in a form of dynamic increase, and displaying the quantity of accounts that have given a like to the multimedia resource in the initialization page in a form of dynamic increase.

In some embodiments, the initialization page includes a like control configured to give a like to the multimedia resource; and the method further includes: switching the like control to a resource view control in response to a trigger operation on the like control, wherein the resource view control is designed for viewing the content page of the multimedia resource.

In some embodiments, the method further includes: displaying resource prompt information in the initialization page, wherein the resource prompt information is configured to prompt a user to view the content page of the multimedia resource.

In some embodiments, upon sending the invitation request to the server, the method further includes: displaying invitation success information, wherein the invitation success information is configured to indicate that the logged-in account of the first terminal has successfully sent an invitation.

FIG. 3 is a flowchart of a method for displaying resources according to an embodiment of the present disclosure. As shown in FIG. 3, the method is performed by a computer device, which is provided as the second terminal shown in FIG. 1 above. In some embodiments, the method may include the following processes.

In 301, the second terminal receives invitation information of an application from a server, wherein the invitation information is configured to invite a target account to participate in a target activity based on the application, the invitation information is sent based on an invitation request for the target account, the invitation request is triggered based on an initialization page of the application, and the initialization page displays a multimedia resource of the target activity and a to-be-invited target account.

In 302, the second terminal displays the invitation information in the application.

The technical solution according to this embodiment of the present disclosure provides an interaction method based on the multimedia resource in the initialization page, such that the to-be-invited target account is enabled to interact with an account that sends the invitation information on the target activity and to participate in the target activity of the multimedia resource, which can result in increased participants on the target activity and enrich the interactive forms of the multimedia resource and improves a display effect of the multimedia resource.

In some embodiments, receiving the invitation information of the application from the server includes any one of: receiving the multimedia resource and the invitation information from the server in response to the application having been launched, receiving the invitation information from the server in response to the application having been launched and the multimedia resource being displayed in the initialization page of the application, and receiving the invitation information from the server in response to the application being in a running state. Displaying the invitation information in the application includes any one of: displaying the multimedia resource and the invitation information in the initialization page of the application, displaying the invitation information in response to the multimedia resource being displayed in the initialization page of the application, and displaying the invitation information in the application in a form of a prompt message.

In some embodiments, displaying the invitation information in the application includes any one of: displaying question invitation information in the application, wherein the question invitation information is configured to initiate a question for the target account to answer, displaying resource invitation information in the application, wherein the resource invitation information is configured to invite the target account to receive a virtual resource, and displaying competitive invitation information in the application, wherein the competitive invitation information is configured to invite the target account to participate in a competitive activity.

In some embodiments, upon displaying the question invitation information in the application, the method further includes: displaying reply success information in response to a reply operation on the question invitation information, wherein the reply success information is configured to indicate that the question has been successfully answered.

In some embodiments, upon displaying the question invitation information in the application, the method further includes any one of: displaying second question information in response to the reply operation on the question invitation information, wherein the second question information is configured to initiate the question for the target account to other accounts, displaying a resource receiving page in response to an accept operation on the resource invitation information, wherein the resource receiving page includes at least one to-be-received virtual resource, and displaying a content page of the competitive activity in response to an accept operation on the competitive invitation information.

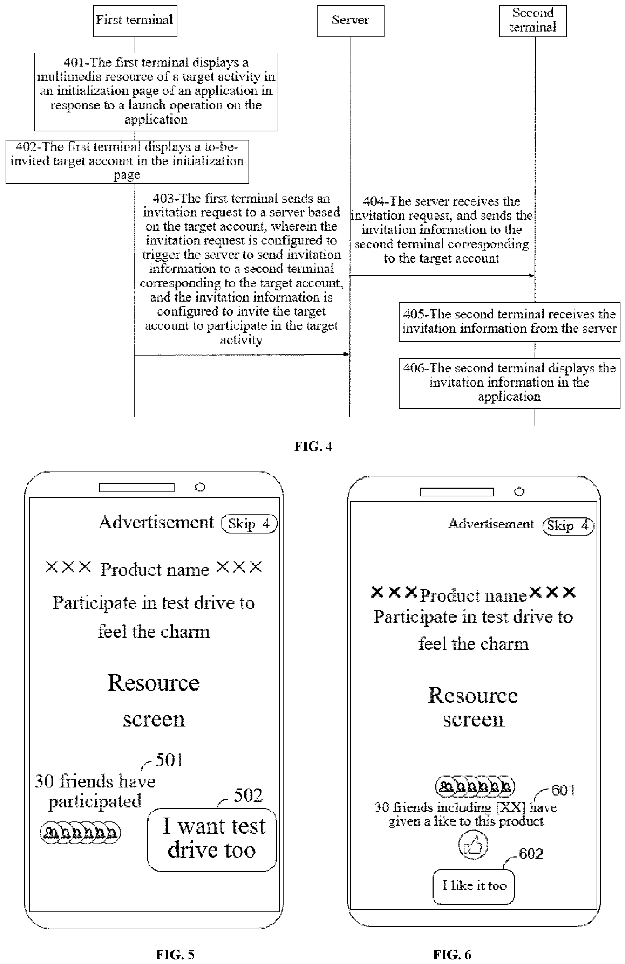

FIG. 2 and FIG. 3 only illustrate the basic processes of the present disclosure. The schemes of the present disclosure are further described in the following based on a specific embodiment. In the embodiments of the present disclosure, the scheme is described by taking an interaction process of the first terminal, the second terminal and the server shown in FIG. 1 as an example. FIG. 4 is a flowchart of a method for displaying resources according to an embodiment of the present disclosure. Referring to FIG. 4, the method includes the following processes.

In 401, the first terminal displays a multimedia resource of a target activity in an initialization page of an application in response to a launch operation on the application.

In 402, the first terminal displays a to-be-invited target account in the initialization page.

In 403, the first terminal sends an invitation request to a server based on the target account, wherein the invitation request is configured to trigger the server to send invitation information to a second terminal corresponding to the target account, and the invitation information is configured to invite the target account to participate in the target activity.

In 404, the server receives the invitation request, and sends the invitation information to the second terminal corresponding to the target account.

In 405, the second terminal receives the invitation information from the server.

In 406, the second terminal displays the invitation information in the application.

The technical solution according to the embodiment of the present disclosure provides an interaction method based on the multimedia resource in the initialization page, which enriches the interactive forms of the multimedia resource and improves a display effect of the multimedia resource.

For the method for displaying resources according to the above embodiment, in 401, the first terminal is a terminal corresponding to an inviting user. In some embodiments, the first terminal includes various types of applications running on the first terminal, such as video applications, live-streaming applications, shopping applications and social media applications. The initialization page refers to a page that is first displayed in the case that the application is launched, also referred to as a screen-opening page configured to display a resource screen. In some embodiments, the target activity is an advertisement or promotion type activity. For example, the target activity is an activity configured to advertise and promote a product or service. Correspondingly, the multimedia resource of the target activity is an advertisement-type resource. For example, the multimedia resource is a resource configured to advertise a product or service. In some embodiments, the resource type of the multimedia resource is a picture type or a video type. In some embodiments, the multimedia resource may also be referred to as a screen-opening advertisement.

In some embodiments, the inviting user performs the launch operation on the application of the first terminal by operating on the first terminal, the first terminal displays the multimedia resource of the target activity in the initialization page of the application in response to the launch operation on the application.

Further, for the initialization page, in some embodiments, the first terminal also displays relevant information of the target activity in the initialization page to guide the user to participate and click. The corresponding process is as follows.

In some embodiments, the first terminal displays a quantity of accounts that have participated in the target activity in the initialization page. The initialization interface is a resource screen for displaying resources. In this way, the amount of information displayed on the initialization page is increased. In some embodiments, FIG. 5 is a schematic diagram of an initialization page according to an embodiment of the present disclosure. Referring to FIG. 5, the initialization page is a "screen-opening page" shown in FIG. 5, the "screen-opening interface" is configured to display the resource screen, and the multimedia resource is a "screen-opening advertisement" displayed on the "screen-opening page." In FIG. 5, for example, the product is a car and the target activity is a car test drive activity. The first terminal displays a quantity of accounts that have participated in the car test drive activity in the "screen-opening page." Referring to FIG. 5, the quantity of accounts that have participated in the target activity is "30" in "prompt information 501" shown in FIG. 5.

For the above process of displaying the quantity of accounts that have participated in the target activity, in some embodiments, the first terminal displays a quantity of accounts that have participated in the target activity in the initialization page in a form of dynamic increase. In some embodiments, the form of dynamic increase refers to a dynamic increase in a value corresponding to the quantity of accounts that have participated in the target activity. Alternatively, in other embodiments, referring to FIG. 5, the form of dynamic increase refers to a dynamic increase in avatars of accounts that have participated in the target activity. In this way, the display form of dynamic increase is adopted to improve a display effect of the quantity of accounts, and effectively attract users to participate in the target activity.

In some embodiments, the first terminal displays an activity participation control of the target activity in the initialization page. The activity participation control is configured to trigger the participation of the target activity. Correspondingly, the first terminal displays a content page of the multimedia resource in response to a trigger operation on the activity participation control, such that the user can view details of the target activity in the content page. In some embodiments, referring to FIG. 5, the activity participation control is an "I WANT TEST DRIVE control" 502 shown in FIG. 5. The content page of the multimedia resource is also a landing page of the multimedia resource. For example, the multimedia resource is a screen-opening advertisement, and the content page of the multimedia resource is also a landing page of the screen-opening advertisement. It should be understood that the content page of the multimedia resource is also a landing page of the target activity.

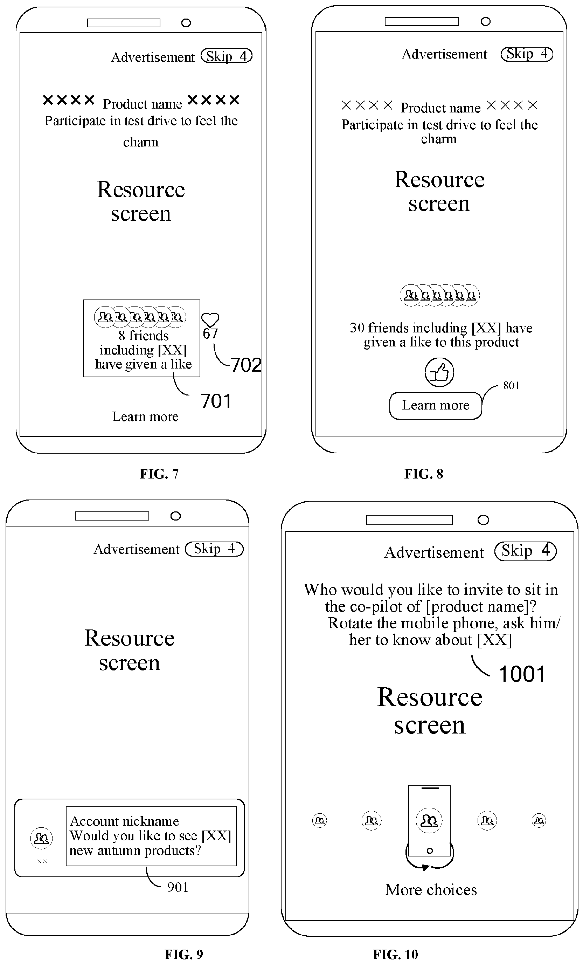

In some embodiments, the first terminal displays the quantity of accounts that have given a like to the multimedia resource in the initialization page. In this way, the amount of information displayed on the initialization page is increased. In some embodiments, FIG. 6 is a schematic diagram of an initialization page according to an embodiment of the present disclosure, and FIG. 7 is a schematic diagram of an initialization page according to an embodiment of the present disclosure. Referring to FIG. 6 or FIG. 7, the initialization page is a "screen-opening page" shown in FIG. 6 or FIG. 7, the "screen-opening interface" is configured to display the resource screen, and the multimedia resource is a "screen-opening advertisement" displayed on the "screen-opening page." The first terminal displays the quantity of accounts that have given a like to the multimedia resource in the "screen-opening page." For example, the quantity of accounts that have given a like to the multimedia resource is "30" in "prompt information"601 shown in FIG. 6, or "8" in "prompt information" 701 shown in FIG. 7. In the initialization page shown in FIG. 6, the display of the quantity of accounts that have given a like to a product is taken as an example. It should be understood that a like on the multimedia resource also refers to a like on a product associated with the multimedia resource.

For the above process of displaying the quantity of accounts that have given a like to the multimedia resource, in some embodiments, the first terminal displays the quantity of accounts that have given a like to the multimedia resource in the initialization page in a form of dynamic increase. In some embodiments, the form of dynamic increase refers to a dynamic increase in a value corresponding to the quantity of accounts that have given a like to the multimedia resource. Alternatively, in other embodiments, referring to FIG. 6 or FIG. 7, the form of dynamic increase refers to a dynamic increase in avatars of accounts that have given a like to the multimedia resource. In this way, the display form of dynamic increase is adapted to improve a display effect of the quantity of accounts, and effectively attract users to give a like to the multimedia resource.

In some embodiments, the first terminal displays alike control of the multimedia resource in the initialization page, and the like control is configured to give a like to the multimedia resource. Correspondingly, the first terminal displays that the quantity of accounts that have given a like to the multimedia resource is increased by one in response to a trigger operation on the like control. In some embodiments, referring to FIG. 6, the like control 602 is a "LIKE IT TOO control" shown in FIG. 6. Alternatively, referring to FIG. 7, the like control 702 is a "HEART control" shown in FIG. 7.

With respect to the like control displayed above, in some embodiments, the first terminal switches the like control to a resource view control in response to a trigger operation on the like control, and the resource view control is designed for viewing the content page of the multimedia resource. In the embodiments of the present disclosure, in response to the user's trigger operation on the like control, the like control is switched to the resource view control, such that the user triggers the first terminal to display the content page of the multimedia resource by the resource view control, which improves the user's interactive experience. In some embodiments, FIG. 8 is a schematic diagram of an initialization page according to an embodiment of the present disclosure. Referring to FIG. 8, the resource view control 801 is a "LEARN MORE control" shown in FIG. 8. Taking the "LIKE IT TOO" control 602 shown in FIG. 6 and the "Learn more" control 801 shown in FIG. 8 as examples, the display of "LIKE IT TOO" control 602 is switched to the "LEARN MORE" control 802 in response to the inviting user's to click operation on "LIKE IT TOO" control 602. In this way, the inviting user's click operation on the "LEARN MORE" control 802 can trigger the first terminal to display the content page of the multimedia resource.

In some embodiments, the first terminal displays resource prompt information in the initialization page, and the resource prompt information is configured to prompt the user to view the content page of the multimedia resource. By displaying the resource prompt information, the amount of information displayed on the initialization page is increased, and the effect of guiding the user to view the content page of the multimedia resource can be achieved. In some embodiments, FIG. 9 is a schematic diagram of an initialization page according to an embodiment of the present disclosure. Referring to FIG. 9, the resource prompt information is "prompt information" 901 shown in FIG. 9. For example, the content of the resource prompt information is "Would you like to see [XX] new autumn products." Further, in some embodiments, the resource prompt information is celebrity guidance information to attract users to make interactions. For example, the content of the resource prompt information is " [celebrity name]: Would you like to see [XX] new autumn products."

It should be noted that, for the above process of displaying relevant information of the target activity in the initialization page, in some embodiments, the first terminal displays one, two, or more of relevant information of the target activity shown above in the initialization page. For example, the first terminal displays the quantity of accounts that have participated in the target activity in the initialization page and the activity participation control of the target activity, or the first terminal displays the quantity of accounts that have given a like to the multimedia resource and the like control of the multimedia resource in the initialization page.

For the above process 402, the following describes the process of displaying the target account in the initialization page by the first terminal based on Examples 1 and 2 hereinafter.

Example 1: In some embodiments, the initialization page displays at least one account or a plurality of accounts; and correspondingly, the process of displaying the target account by the first terminal includes: by the first terminal, determining, in response to a select operation on the one or more accounts in the initialization page, a selected account as the target account, and displaying the target account. In this way, by displaying the at least one account on the initialization page, the user can perform the select operation one of the displayed accounts, thereby quickly determining the target account, and improving the efficiency of human-computer interaction.

In some embodiments, the displayed accounts include at least one of a friend account of a logged-in account of the first terminal in the application, an account that the logged-in account of the first terminal has followed in the application, an account that has followed the logged-in account of the first terminal in the application, and an account that has followed each other with the logged-in account of the first terminal. In this way, by sending an invitation to a friend account or a followed account in the application, an interaction method between friend accounts based on the multimedia resource in the initialization page is provided, thereby enriching the interactive forms of the multimedia resource. Further, in some embodiments, the target account is a friend account of the inviting user in other social media applications.

In some embodiments, the first terminal displays the at least one account in a form of displaying an avatar. Subsequent embodiments of the present disclosure describe the process of determining the target account by displaying an avatar of at least one account as an example.

In some embodiments, the first terminal displays a plurality of accounts, and displays, in response to a rotate operation on the first terminal, the at least one account moving with the rotate operation in the initialization page. The first terminal determines, in response to one account being moved to a target region in the initialization page, the account as the target account. The target region is a region where the selected account is disposed. For example, the target region is a central region of the initialization page. In this way, by means of the rotate operation on the first terminal, the target account can be selected/determined quickly, which not only improves the efficiency of human-computer interaction, but also enriches the interactive forms based on the initialization page.

In the embodiments of the present disclosure, a gyroscope is disposed inside the first terminal. The gyroscope is configured to monitor an angular velocity of the first terminal during the rotation, then acquire a rotation angle of the first terminal in a corresponding direction based on the angular velocity, and then display at least one account in the initialization page based on the acquired rotation angle. For example, in the case that the first terminal rotates with a horizontal line as an axis, the rotation angle of the first terminal relative to the horizontal plane can be acquired by the gyroscope inside the first terminal, and then at least one account in the initialization page is displayed based on the rotation angle.

In some embodiments, the avatar of the displayed account is taken as an example. For any account in the plurality of accounts, in the process of moving the avatar of the account from the original region to the target region, the avatar of the account disposed in the original region is displayed as a first size, and the avatar of the account disposed in the target region is displayed as a second size. The first size is less than the second size. Further, in some embodiments, in the process of moving the avatar of the account from the original region to the target region, the first terminal displays that the size of the avatar of the account increases with the movement. In this way, in the process of approaching the target region, the avatar of the account gradually becomes larger, and in the process of moving away from the target region, the avatar of the account gradually becomes smaller.

In some embodiments, FIG. 10 is a schematic diagram of an initialization page according to an embodiment of the present disclosure. Referring to FIG. 10, avatars of five accounts are displayed in a "screen-opening page" shown in FIG. 10, and the "screen-opening interface" is configured to display the resource screen. Assuming the first terminal rotates with a horizontal line as an axis (e.g., the horizontal line is a left side of the terminal) and rotates up and toward the left, it creates an effect that the five avatars are being rotated from the right to the left. Assuming the first terminal rotates with a horizontal line as an axis (e.g., the horizontal line is a left side of the terminal) and rotates down and toward the left, it creates an effect that the five avatars are being rotated from the left to the right.

In some embodiments, in response to a duration of the account being in the target region for a target duration, the account is determined as the target account. The target duration is a preset fixed duration, such as 5 seconds. Reaching the target duration indicates that a duration of stay in the target region is greater than or equal to the target duration. In this way, in the case that the account is moved to the target region for a certain duration, this account is determined as a selected account, so as to avoid erroneously determining the target account during the account moving process, thereby ensuring the accuracy of the determined target account.

In some embodiments, the first terminal displays rotation prompt information in the initialization page. The rotation prompt information is configured to prompt a user to rotate the first terminal to select the target account. In some embodiment, referring to FIG. 10, the rotation prompt information is "prompt information" 1001 shown in FIG. 10. For example, the content of the rotation prompt information is "Rotate the mobile phone, and ask him to know about [XX]."

In some embodiments, a target icon is displayed in the initialization page; and correspondingly, the process of determining the target account by the first terminal includes: by the first terminal, displaying, in response to a drag operation on the target icon, the target icon moving with the drag operation, and determining, in response to the target icon moving to a region where any account is disposed, the account as the target account. In this way, by the drag operation on the target icon, the target account can be quickly determined, which not only improves the efficiency of human-computer interaction, but also enriches the interactive forms based on the initialization page.

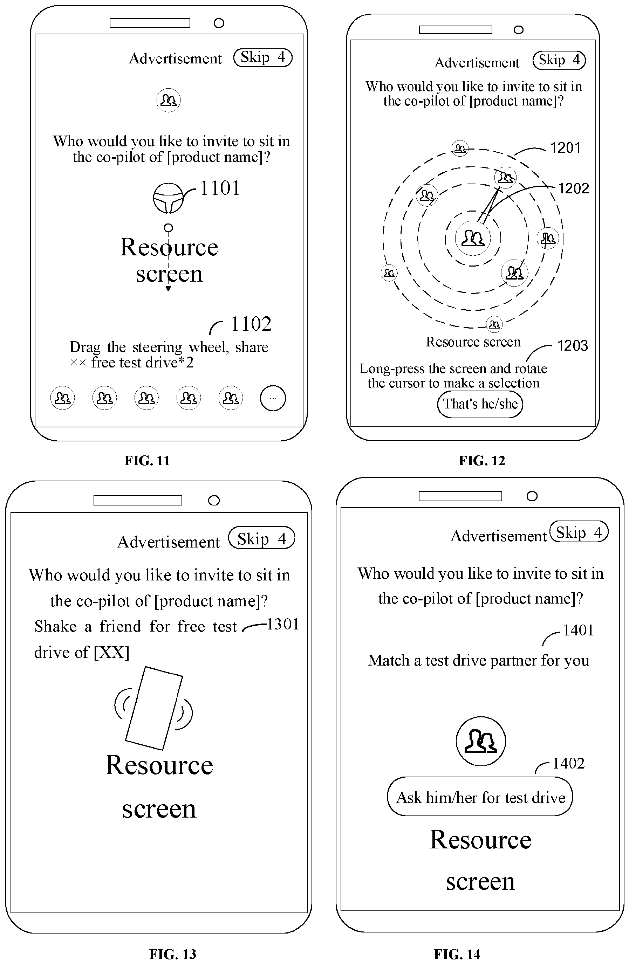

The target icon is a preset icon. In some embodiments, the target icon is an icon associated with the multimedia resource. For example, the target icon is a car model icon or a steering wheel icon or the like in the case that the multimedia resource is configured to advertise or promote a car. The setting of the target icon is not limited in the embodiments of the present disclosure. In some embodiment, FIG. 11 is a schematic diagram of an initialization page according to embodiment of the present disclosure. Referring to FIG. 11, avatars of five accounts are displayed in a "screen-opening page" shown in FIG. 11, the "screen-opening interface" is configured to display the resource screen, and the target icon is a "steering wheel icon 1101" shown in FIG. 11.

In some embodiments, the first terminal determines, in response to the region where any account is active being overlapped with the region where the target icon is displayed, the account as the target account. In this way, in the case that the region where this account is active is overlapped with the region where the icon is displayed, the account corresponding to the region to which the icon is moved is determined as the selected account, so as to avoid erroneously determining the target account during the account moving process, thereby ensuring the accuracy of the determined target account. With the avatar of the displayed account as an example, the first terminal performs the step of determining, in response to the region where an account is overlapped with the region where the target icon is displayed, the account as the target account. Further, the first terminal determines, in response to a region where the account is overlapped with the region where the target icon is displayed, the account as the target account.

In some embodiments, the first terminal displays drag prompt information in the initialization page. The drag prompt information is configured to prompt a user to drag the target icon to select the target account. In some embodiments, referring to FIG. 11, the drag prompt information is "prompt information" 1102 shown in FIG. 11. For example, the content of the drag prompt information is "Drag the steering wheel, and share xx free test drive^{∗}2."

In some embodiments, a target object is displayed in the initialization page, wherein the target object includes the at least one account and a pointing control; and correspondingly, the process of determining the target account by the first terminal includes: by the first terminal, displaying the pointing control rotating along the target object in response to a long-press operation on the target object, and determining an account pointed to by the pointing control as the target account in response to a release operation on the target object.

In some embodiments, the target object is in a form of a turntable. In some embodiments, the pointing control is in a form of a pointer or cursor. In some embodiments, with the turntable and the pointer as an example, the first terminal displays the pointer rotating along the turntable in response to a long-press operation on a central region of the turntable, and determines an account pointed to by the pointer as the target account in response to a release operation on the central region of the turntable. In this way, by the long-press operation on the turntable in the initialization page, the target account can be quickly determined, which not only improves the efficiency of human-computer interaction, but also enriches the interactive forms based on the initialization page. In some embodiments, FIG. 12 is a schematic diagram of an initialization page according to an embodiment of the present disclosure. Referring to FIG. 12, avatars of a plurality of accounts are displayed in the initialization page. The target object is a "turntable" 1201 shown in FIG. 12, and the pointing control is a "cursor" 1202 shown in FIG. 12.

In some embodiments, the first terminal displays long-press prompt information in the initialization page. The long-press prompt information is configured to prompt a user to long-press a screen of the first terminal to select a target account. In some embodiments, referring to FIG. 12, the long-press prompt information is "prompt information" 1203 shown in FIG. 12. For example, the content of the long-press prompt information is "Long-press the screen and rotate the cursor to make a selection."

In the above embodiment, three operation modes, namely, a gyroscope-based rotate operation, an icon-based drag operation, and a turntable-based long-press operation, are provided to select the target account, which is simple and convenient to operate, and improves the efficiency of human-machine interaction. In some embodiments, for any one of the above three operation modes, in response to selecting the target account, the first terminal automatically displays the target account.

Example 2: In some embodiments, the first terminal displays the target account in the initialization page in response to a trigger operation on the first terminal.

In some embodiments, the first terminal displays the target account in the initialization page in response to a shake operation on the first terminal. In other embodiments, the first terminal displays the target account in the initialization page in response to a rotate operation on the first terminal.

In some embodiments, the target account is an account recommended by the server; and the corresponding process includes: displaying, by the first terminal, the account recommended by the server in the initialization page in response to the trigger operation on the first terminal. In the embodiment of the present disclosure, by the shake or rotate operation on the first terminal, the display of the account recommended by the server can be triggered, such that the target account can be quickly determined, which improves the efficiency of determining the target account and also improves the efficiency of human-computer interaction. That is, the target account is automatically determined in response to a trigger operation by a user (e.g., rotating or shaking the terminal) without an actual selection step by a user.

In some embodiments, the account recommended by the server is at least one of an account whose correlation degree with the logged-in account of the first terminal is greater than a correlation degree threshold, and an account that has not participated in the target activity. In some embodiments, the correlation degree refers to an association such as friendship level, and accordingly, the correlation degree threshold refers to an friendship threshold. In some embodiments, the friendship is in a form of numerical representation or the like. In some embodiments, the correlation degree is determined based on a quantity of interactions with a logged-in account of the first terminal within a period, such as a quantity of interactions within 7 days, and accordingly, the correlation degree threshold is an interaction quantity threshold, such as 5. The quantity of interactions is at least one of the quantity of chats, the quantity of likes, the quantity of comments, and the quantity of visits. In some embodiments, the account that has not participated in the target activity refers to an account that has not participated in the target activity among friend accounts of the logged-in account of the first terminal, or an unfamiliar account that has not participated in the target activity. In the embodiment of the present disclosure, by recommending the account with a correlation degree greater than the correlation degree threshold, users can be attracted to click to initiate invitations, which facilitates the users to participate in the target activity. On the other hand, by recommending the account that has not participated in the target activity, users can be attracted to initiate invitations to the account that has not participated in the target activity, thereby increasing a user conversion rate of the target activity, or users are attracted to follow related accounts, thereby increasing the user conversion rate of the target activity.

In some embodiments, the processes of Example 2 are jointly performed by the first terminal and the server, and the corresponding processes are as follows. The first terminal sends an account receiving request to the server in the initialization page in response to the trigger operation on the first terminal, wherein the account acquiring request is configured to request to receive the account recommended by the server. The server receives the account receiving request, determines a to-be-recommended account based on the account receiving request, and returns the determined account to the first terminal. The first terminal receives the account recommended by the server, and displays the account recommended by the server in the initialization page.

The following describes the implementation process of the embodiment 2 with the shake operation as an example.

In some embodiments, the first terminal displays shaking prompt information in the initialization page. The shaking prompt information is configured to prompt a user to shake the first terminal to acquire the target account. In some embodiments, FIG. 13 is a schematic diagram of an initialization page according to embodiment of the present disclosure. Referring to FIG. 13, the shaking prompt information is "prompt information" 1301 shown in FIG. 13. The content of the shaking prompt message is "Shake a friend for free test drive of [XX]." In the case that the inviting user performs a shake operation on the first terminal, the first terminal displays the account recommended by the server in the initialization page. In some embodiment, FIG. 14 is a schematic diagram of an initialization page according to an embodiment of the present disclosure. Referring to FIG. 14, the display of an avatar of an account recommended by a server and a friend's account matching the logged-in account of the first terminal are taken as an example. In some embodiments, the first terminal also displays account prompt information when displaying the account recommended by the server. The account prompt information is configured to prompt that the account recommended by the server has been received. Referring to FIG. 14, the account prompt information is "prompt information" 1401 shown in FIG. 14. For example, the content of the account prompt information is "Match a test drive partner for you."

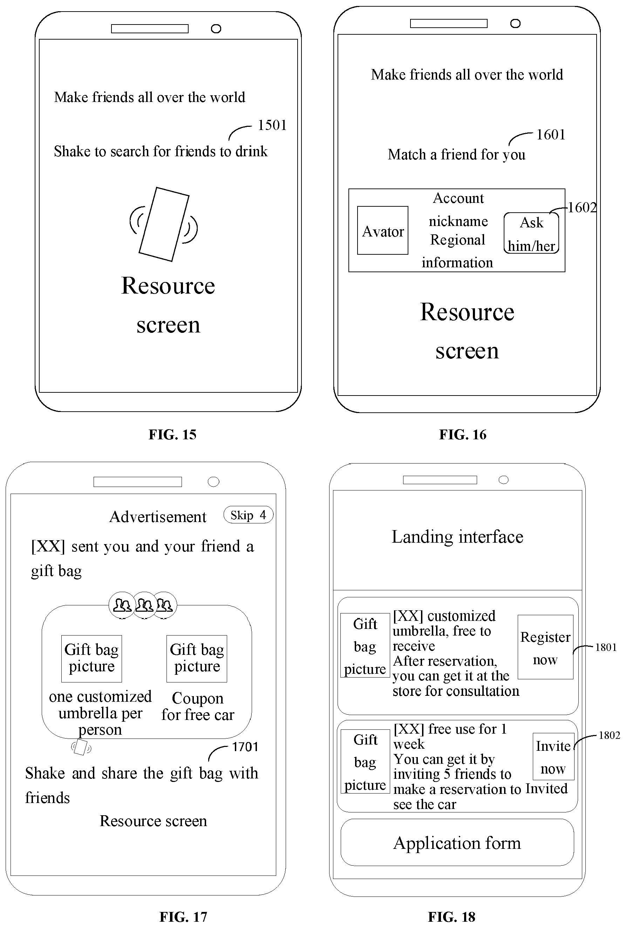

It should be understood that the prompt information displayed in the initialization page is determined based on a product associated with the multimedia resource. The product associated with the multimedia resource being a car is taken as an example in FIG. 14. The product associated with the multimedia resource being wine is taken as an example below. FIG. 15 is a schematic diagram of an initialization page according to an embodiment of the present disclosure. Referring to FIG. 15, the shaking prompt information is "prompt information" 1501 shown in FIG. 15. For example, the content of the shaking prompt information is "Shake to search for friends to drink." In the case that the inviting user performs the shake operation on the first terminal, the first terminal displays the account recommended by the server in the initialization page. FIG. 16 is a schematic diagram of an initialization page according to an embodiment of the present disclosure. Referring to FIG. 16, matching to an unfamiliar account that has not participated in the target activity is taken as an example. An avatar, a nickname and an address of the unfamiliar account are displayed in the initialization page shown in FIG. 16. Referring to FIG. 16, the account prompt information is "prompt information" 1601 shown in FIG. 16. For example, the content of the account prompt information is "Match a friend for you."

In some embodiments, the first terminal displays a first invitation control in the initialization page in the case that the account recommended by the server is displayed. The first invitation control is configured to invite the target account to participate in the target activity. Correspondingly, the first terminal performs the process 403 in response to a trigger operation on the first invitation control. By setting the first invitation control in the initialization page, the user can trigger a process of sending the invitation request by the first invitation control, which improves the efficiency of human-computer interaction. In some embodiment, referring to FIG. 14, the first invitation control is an "ASK HIM FOR DRIVE TEST" control 1402 shown in FIG. 14. Referring to FIG. 16, the first invitation control is an "ASK HIM/HER" control 1602 shown in FIG. 16.

It should be noted that, in 402, the scheme is described by taking the display of the target account in the initialization page as an example. In other embodiments, the first terminal determines the target account based on a content page of the multimedia resource; and the corresponding process includes: by the first terminal, displaying the content page of the multimedia resource in response to the trigger operation based on the initialization page, and determining the target account based on the content page. In this way, by initializing the page, the display of the content page can be triggered, and then the target account can be determined through the content page, which is simple and convenient to operate and improves the efficiency of human-computer interaction. In addition, through the content page, it is convenient for the user to determine the target account according to the actual situation, which improves the user's operation experience.

In some embodiments, displaying the content page of the multimedia resource by the first terminal in response to the trigger operation based on the initialization page includes displaying the content page of the multimedia resource in the initialization page in response to the shake operation on the first terminal. By the shake operation on the first terminal, the display of the content page can be triggered, which is simple and convenient to operate and improves the efficiency of human-computer interaction.

In some embodiments, the content page includes a second invitation control configured to invite other accounts to participate in the target activity. Correspondingly, determining the target account by the first terminal based on the content page includes determining the target account in response to a trigger operation on the second invitation control. By setting the second invitation control in the content page, the user can determine the target account by the second invitation control, which improves the efficiency of human-computer interaction.

In some embodiments, the first terminal displays activity prompt information in the initialization page. The activity prompt information is configured to prompt a user to shake the first terminal to participate in the target activity. In some embodiments, FIG. 17 is a schematic diagram of an initialization page according to an embodiment of the present disclosure. Referring to FIG. 17, the target activity being an activity of sharing a gift bag is taken as an example. The activity prompt information is "prompt information" 1701 shown in FIG. 17. For example, the content of the activity prompt information is "Shake and share the gift bag with friends." The first terminal displays the content page of the multimedia resource in the initialization page in the case that the inviting user performs the shake operation on the first terminal. In some embodiments, the terminal displays at least one account in the initialization page. Taking the display of an avatar of at least one account as an example, the at least one account displayed in the initialization page is avatars of three accounts shown in FIG. 17. FIG. 18 is a schematic diagram of an initialization page according to an embodiment of the present disclosure. Referring to FIG. 18, the content page of the multimedia resource is a "landing page" shown in FIG. 18, and the second invitation control is a "REGISTER NOW" control 1801 or an "INVITE NOW" control 1802 shown in FIG. 18.

Process 402 is the process of displaying the target account by the first terminal in the initialization page, so as to carry out a process of sending invitation information to the second terminal subsequently, thereby implementing the interaction based on the multimedia resource in the initialization page. In other embodiments, in the case that the logged-in account of the first terminal does not participate in the interaction, it is also possible to directly trigger the display of the content page of the multimedia resource. The corresponding process includes any one of the followings.

In some embodiments, the first terminal displays the content page of the multimedia resource in response to a trigger operation on a blank region in the initialization page. In still other embodiments, the first terminal displays the content page of the multimedia resource in the initialization page in response to the shake operation on the first terminal. In still other embodiments, the first terminal displays the content page of the multimedia resource in the initialization page in response to the rotate operation on the first terminal. In the embodiments of the present disclosure, in the case that the logged-in account of the first terminal does not participate in the interaction, the display of the content page of the multimedia resource is triggered by clicking the blank region, shaking the first terminal or rotating the first terminal, which is simple and convenient to operate and improves the efficiency of human-computer interaction.

In processes 401 to 403, the inviting user determines the target account by operating on the initialization page of the first terminal, and then the first terminal can be triggered to send an invitation request to the server, so as to trigger the server to send the invitation information to the second terminal corresponding to the target account, thereby inviting the target account to participate in the target activity. Therefore, an interactive method based on the initialization page is provided. In the embodiments of the present disclosure, the target activity is an activity of any type, such as a competitive type activity, a question-answer type activity and a reward resource receiving activity. The activity type of the target activity is not limited in the embodiments of the present disclosure. In some embodiments, the first terminal also displays different prompt information based on different activity types of the target activity, thereby initiating invitations corresponding to different activity types. The process of displaying the prompt information based on the above three types of activities is described as follows.

In some embodiments, the initialization page further includes first question information., The first question information is configured to initiate a question for the logged-in account of the first terminal to other accounts, and the invitation information is configured to invite the target account to answer the question.

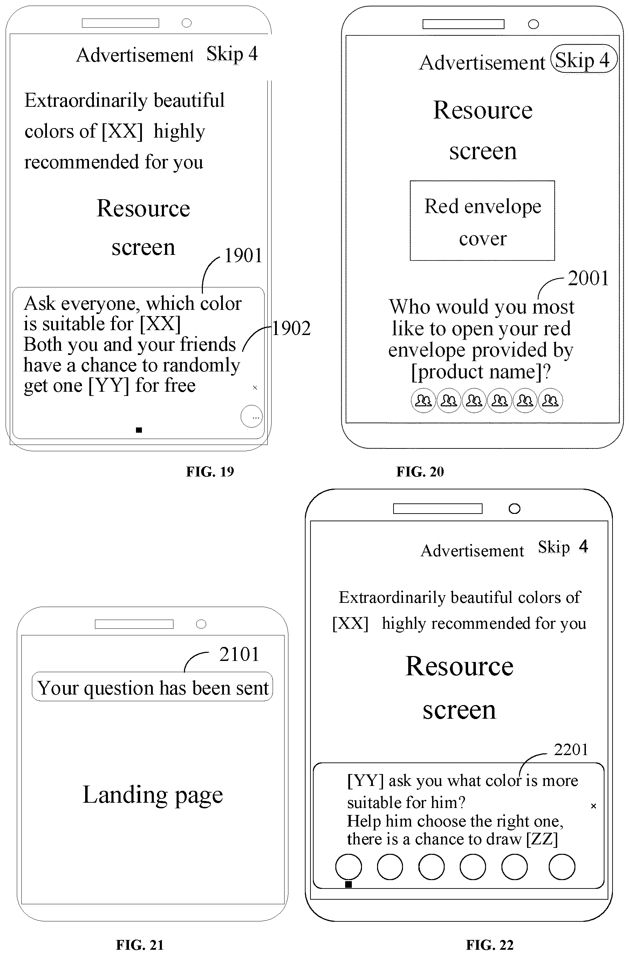

In some embodiments, FIG. 19 is a schematic diagram of an initialization page according to an embodiment of the present disclosure. Referring to FIG. 19, an avatar of a plurality of accounts and first question information are displayed in the initialization page shown in FIG. 19. The first question information is "prompt information" 1901 shown in FIG. 19. For example, the content of the first question information is "Ask everyone, which color is suitable for [XX]," wherein the content of [XX] is a nickname of the logged-in account of the first terminal. In the case that the inviting user implements a click operation on an avatar of any one of the plurality of accounts, the first terminal determines the selected account as the target account, and then sends invitation information corresponding to the first question information to the terminal corresponding to the target account through the server, so as to invite the target account to answer the question.

Further, in some embodiments, the first terminal displays reward prompt information in the initialization page to attract users to participate in the activity. Referring to FIG. 19, the reward prompt information is "prompt information 1902" shown in FIG. 19. For example, the content of the reward question information is "Both you and your friends have a chance to randomly get one [YY] for free."

In some embodiments, the initialization page further includes resource information. The resource information is configured to invite other accounts to receive a virtual resource, and the invitation information is configured to invite the target account to receive the virtual resource.

In some embodiments, FIG. 20 is a schematic diagram of an initialization page according to an embodiment of the present disclosure. Referring to FIG. 20, an avatar of a plurality of accounts and resource information are displayed in the initialization page shown in FIG. 20. The resource information is "prompt information" 2001 shown in FIG. 20. For example, the content of the resource information is "Who would you most like to open your red envelope provided by [product name]?" In the case that the inviting user performs a click operation on an avatar of any one of the plurality of accounts, the first terminal determines the selected account as the target account, and further sends invitation information corresponding to the resource information to the terminal corresponding to the target account through the server, so as to invite the target account to receive the red envelope.

In some embodiments, the initialization page further includes competitive information. The competitive information is configured to invite other accounts to participate a competitive activity, and the invitation information is configured to invite the target account to participate a competitive activity. The competitive information refers to game information. Taking the competitive information being the game information as an example, the game information is configured to invite other accounts to participate in a game, and the invitation information is configured to invite the target account to participate in the game.

In the above embodiments, three types of activities, i.e., the question-answer type activity, the reward resource receiving activity, and the competition type activity are provided based on the initialization page. Different prompt information is displayed on the initialization page based on the different types of activities to provide three kinds of invitation information. That is, three kinds of invitation forms are provided, which enriches the interactive forms based on the initialization page.

In some embodiments, upon sending the initialization request by the first terminal to the server based on the target account, the first terminal further automatically displays the content page of the multimedia resource. In the embodiment of the present disclosure, in the case that an invitation is initiated, the first terminal automatically jumps to the content page of the multimedia resource, such that the user can view details of the multimedia resource, and the content page can be automatically displayed without the user's trigger operation, which improves the efficiency of human-computer interaction.

In some embodiments, upon sending the invitation request by the first terminal to the server based on the target account, the first terminal further displays invitation success information. The invitation success information is configured to indicate that the logged-in account of the first terminal has successfully sent an invitation. In the embodiment of the present disclosure, the amount of information displayed in the initialization page is increased by displaying the invitation success information, such that the user can be informed of the progress of the invitation in time.

In some embodiments, upon sending the initialization request by the first terminal to the server based on the target account, the first terminal automatically jumps to the content page of the multimedia resource, and displays the invitation success information in the content page. In some embodiments, FIG. 21 is a schematic diagram of an initialization page according to an embodiment of the present disclosure. Referring to FIG. 21, the target activity being a question-answer type activity is taken as an example. The invitation success information is "prompt information" 2101 shown in FIG. 21. For example, the content of the invitation success information is "Your question has been sent!"

In 404, upon receiving the invitation request for the target account, the server sends the invitation information to the second terminal corresponding to the target account based on the target account carried by the invitation request.

In some embodiments, upon receiving the invitation request, the server determines whether the application on the second terminal corresponding to the target account is in a running state based on the target account carried in the invitation request, and then determines whether to send the invitation information to the second terminal based on the running state of the application on the second terminal.

In some embodiments, the server sends the invitation information of the application to the second terminal in response to the application on the second terminal being in the running state. It should be noted that the application on the second terminal is in the running state indicates that the second terminal is allowed to receive information, that is, the server is allowed to send information to the second terminal. In some embodiments, the invitation information includes an entry link to the content page of the multimedia resource. In the embodiments of the present disclosure, in the case that the application on the second terminal is in the running state, that is, in the case that the invited user is using the application, the server sends the invitation information to the second terminal to ensure the sending of the invitation information and avoid causing disturbance to the invited user.

In some embodiments, the server does not send the invitation information of the application to the second terminal in response to the application on the second terminal not being in the running state. In some embodiments, the server stores the invitation information of the application in a memory or a cache in response to the application on the second terminal not being in the running state.

Furthermore, the process of sending the invitation information by the server may be implemented in the following two manners.

In some embodiments, the server sends the multimedia resource and the invitation information to the second terminal in response to the application on the second terminal having been launched. In some embodiments, the invitation information includes a resource identifier of the multimedia resource, or the invitation request corresponding to the invitation information also includes a resource identifier of the multimedia resource. Further, the server acquires the multimedia resource based on the resource identifier of the multimedia resource. In some embodiments, the server stores the invitation information of the application in a memory or a cache and preloads the multimedia resource into the memory or the cache, in response to the application on the second terminal not being in the running state. In this way, by caching the invitation information and preloading the multimedia resource, the efficiency of acquiring the multimedia resource and the invitation information is improved, the delay problem of the subsequent display of the multimedia resource and the invitation information can be optimized, and the problem of long waiting time in the case that the multimedia resource and the invitation information are displayed subsequently is avoided.

In other embodiments, the server sends the invitation information to the second terminal in response to the application on the second terminal having been launched and the multimedia resource being displayed in the initialization page of the application.

In the embodiment of the present disclosure, in the case that the application on the second terminal is launched by the invited user, the server sends the invitation information to the second terminal to ensure the sending of the invitation information and avoid disturbance to the invited user. In the case that the user launches the application, the multimedia resource and the invitation information are displayed in the initialization page of the application. That is, in the case that the user launches the application, a screen-opening advertisement is displayed, and the invitation information is displayed in the screen-opening advertisement.

In some embodiments, the second terminal sends indication information to the server in response to a launch operation on the application, or in response to the launch operation on the application and the display of the multimedia resource in the initialization page of the application. The indication information is configured to indicate that information is allowed to be received. In response to receiving the indication information, the server sends the invitation information to the second terminal.

The following describes receiving the invitation information by the second terminal in process 405.

In some embodiments, the second terminal receives the multimedia resource and the invitation information from the server in the case that the application has been launched. In the embodiments of the present disclosure, in the case that the application on the second terminal has been launched by the invited user, the server sends the multimedia resource and the invitation information to the terminal, which can ensure the sending of the multimedia resource and the invitation information and avoid causing disturbance to the invited user.

In some embodiments, the second terminal receives the invitation information from the server in the case that the application has been launched and the multimedia resource is displayed in the initialization page of the application. In the embodiment of the present disclosure, in the case that the application on the second terminal is launched by the invited user and the multimedia resource is displayed in the initialization page, the server sends the invitation information to the second terminal, which can ensure the sending of the invitation information and avoid causing disturbance to the invited user.

In some embodiments, the second terminal receives the invitation information from the server in the case that the application is in a running state. In the embodiment of the present disclosure, in the case that the application on the second terminal is in the running state, that is, in the case that the invited user is using a target application, the server sends the invitation information to the second terminal, which can ensure the sending of the invitation information and avoid causing disturbance to the invited user.

Correspondingly, the following describes displaying the invitation information by the second terminal in process 406.

In some embodiments, in the case that the application has been launched (the second terminal responds to the startup operation on the application), in response to the second terminal receiving the multimedia resource and the invitation information from the server, the second terminal displays the multimedia resource and the invitation information in the initialization page of the application. In the embodiment of the present disclosure, by sending the multimedia resource and the invitation information, the terminal corresponding to the invited account can display the multimedia resource and the invitation information in the initialization page, thereby achieving a personalized and exclusive display form of the invitation information, enriching the display content in the initialization page of the application and increasing the amount of the displayed information.

In some embodiments, in the case that the application has been launched and the multimedia resource is displayed in the initialization page of the application, in response to the second terminal receiving the invitation information from the server, the second terminal displays the invitation information. In the embodiment of the present disclosure, the invitation information is received and displayed in the case that the multimedia resource is displayed in the initialization page, thereby achieving a personalized and exclusive display form of the invitation information, enriching the display content in the initialization page of the application and increasing the amount of the displayed information.

In some embodiments, the second terminal receives the invitation information from the server in the case that the application is in a running state, and then displays the invitation information in the application in a form of a prompt message. It is convenient to subsequently send the invitation information by the prompt message.

In some embodiments, the displayed invitation information is different based on different activity types of the target activity. The process of displaying the invitation information is described as follows based on the above three types of activities.

In some embodiments, the second terminal displays question invitation information in the application. The question invitation information is configured to initiate a question to the target account.

In some embodiment, FIG. 22 is a schematic diagram of an initialization page according to an embodiment of the present disclosure. Referring to FIG. 22, an account avatar, a nickname and question invitation information of the inviting user are displayed in the initialization page shown in FIG. 22. The question invitation information is "prompt information" 2201 shown in FIG. 22. For example, the content of the question invitation information is " [XX] ask you what color is more suitable for him?"

In the case that the question invitation information is displayed, other embodiments are as follows.

In some embodiments, the second terminal displays second question information in response to a reply operation on the question invitation information. The second question information is configured to initiate a question for the target account to other accounts. In the embodiment of the present disclosure, by displaying the second question information, the amount of the information displayed on the page is increased, such that the user can initiate a question to other accounts based on the second question information, which further enriches the interactive forms based on the initialization page.

In some embodiments, the second terminal displays reply success information in response to a reply operation on the question invitation information. The reply success information is configured to indicate that the question has been successfully answered. The amount of information displayed in the page is increased by displaying the invitation success information, such that the user can be informed of the progress of the reply in time. In some embodiment, the reply success information is "answered." Further, the second terminal sends a reply request to the server, and in response to receiving the reply request, the server sends reply information of the target account to the first terminal. Correspondingly, the first terminal receives and displays the reply information of the target account in the case that the target account has answered the question. In some embodiments, the reply information may be "I think the answer should be xx." By displaying the reply information of the target account, the amount of the displayed information is increased.

In some embodiments, the second terminal displays resource invitation information in the application. The resource invitation information is configured to invite the target account to receive a virtual resource.

In some embodiments, the second terminal displays the content page of the multimedia resource in response to a trigger operation on the resource invitation information. In other embodiments, the invitation information further includes an acceptance invitation control. Correspondingly, the second terminal displays the content page of the multimedia resource in response to a trigger operation on the acceptance invitation control.

In one example, the content of the resource invitation information is "[XX] has shared the [XY] gift bag with you, shake and receive it." The invited user can participate in an activity of receiving the gift bag by performing a shake operation on the second terminal. In another example, the content of the resource invitation information includes "[XX] has sent you the [XZ] red envelope" and a receive control, and the invited user can participate in a red envelope receiving activity by clicking on the receive control.

In some embodiments, upon displaying the resource invitation information, the second terminal further displays a resource receiving page in response to an accept operation on the resource invitation information. The resource receiving page includes at least one to-be-received virtual resource. In the embodiment of the present disclosure, in the case that the invited user accepts the invitation to receive a resource, the resource receiving page is automatically displayed, such that the user can perform the subsequent process of receiving the resource based on the resource receiving page.

In some embodiments, the second terminal displays competitive invitation information in the application. The competitive invitation information is configured to invite the target account to participate in a competitive activity.

In some embodiments, the second terminal displays a content page of the competitive activity in response to an accept operation on the competitive invitation information. In the embodiment of the present disclosure, in the case that the invited user accepts the competitive invitation, the content page of the competition activity is automatically displayed, such that the user can participate in a competitive interaction based on the content page of the competition activity. In some embodiments, the content of the competitive invitation information is "[XX] has challenged you." In some embodiments, the second terminal displays friend accounts that have participated in the competitive activity in the content page of the competitive activity, or displays a competitive ranking list, so as to attract users to participate in the competitive activity.

In the above embodiments, three kinds of invitation information, that is, three kinds of invitation forms are provided, which enriches the interactive forms based on the initialization page.

The technical solutions according to the embodiments of the present disclosure provide an interaction method for the multimedia resource in the initialization page, which enriches the interactive forms of the multimedia resource and improves a display effect of the multimedia resource.

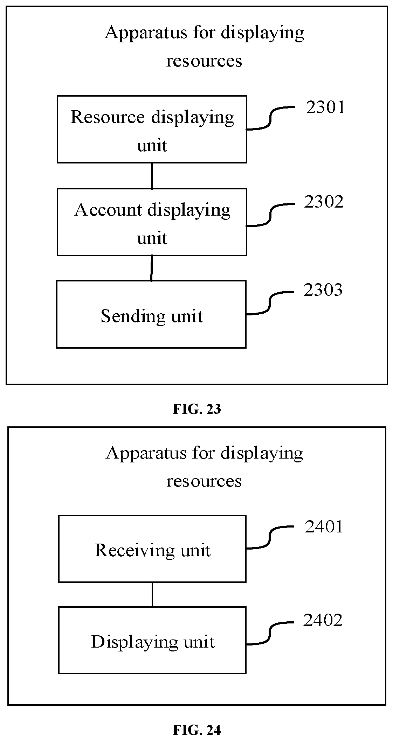

FIG. 23 is a block diagram of an apparatus for displaying resources according to an embodiment of the present disclosure. Referring to FIG. 23, the apparatus includes a displaying unit 2301, a determining unit 2302, and a sending unit 2303.

The resource displaying unit 2301 is configured to display a multimedia resource of a target activity in an initialization page of an application in response to a launch operation on the application.

The account displaying unit 2302 is configured to display a to-be-invited target account in the initialization page.

The sending unit 2303 is configured to send an invitation request to a server based on the target account. The invitation request is configured to trigger the server to send invitation information to a second terminal corresponding to the target account, and the invitation information is configured to invite the target account to participate in the target activity.

The technical solution according to this embodiment of the present disclosure provides an interaction method for the multimedia resource in the initialization page, which enriches the interactive forms of the multimedia resource and improves a display effect of the multimedia resource.

In some embodiments, the account displaying unit 2302 is further configured to determine, in response to a select operation on at least one account in the initialization page, a selected account as the target account, and display the target account.

In some embodiments, the account displaying unit 2302 includes a displaying sub-unit, configured to display, in response to a rotate operation on the first terminal, the at least one account moving with the rotate operation in the initialization page, and a determining sub-unit, configured to determine, in response to any account being moved to a target region in the initialization page, the account as the target account. The target region represents a region where the selected account is disposed.

In some embodiments, the determining sub-unit is configured to determine the account as the target account in response to a duration of the account in the target region reaching a target duration.

In some embodiments, a target icon is displayed in the initialization page. The account displaying unit 2302 includes a displaying sub-unit, configured to display, in response to a drag operation on the target icon, the target icon moving with the drag operation, and a determining sub-unit, configured to determine, in response to the target icon moving to a region where any account is disposed, the account as the target account.

In some embodiments, the determining sub-unit is configured to determine the account as the target account in response to the region where the account is active being overlapped with the region where the target icon is displayed.

In some embodiments, a target object is displayed in the initialization page, wherein the target object includes the at least one account and a pointing control; and the account displaying unit 2302 includes a displaying sub-unit, configured to display the pointing control rotating along the target object in response to a long-press operation on the target object, and a determining sub-unit, configured to determine an account pointed to by the pointing control as the target account in response to a release operation on the target object.

In some embodiments, the at least one account is at least one of a friend account of a logged-in account of the first terminal in the application, an account that the logged-in account of the first terminal has followed in the application, an account that has followed the logged-in account of the first terminal in the application, and an account that has followed each other with the logged-in account of the first terminal.

In some embodiments, the account displaying unit 2302 is configured to perform at least one of: displaying the target account in the initialization page in response to a shake operation on the first terminal, and displaying the target account in the initialization page in response to a rotate operation on the first terminal.

In some embodiments, the initialization page includes a first invitation control configured to invite the target account to participate in the target activity. The sending unit 2303 is further configured to perform sending the invitation request to the server based on the target account in response to a trigger operation on the first invitation control.

In some embodiments, the target account is an account recommended by the server. The account recommended by the server is at least one of an account whose correlation degree with the logged-in account of the first terminal is greater than a correlation degree threshold, and an account that has not participated in the target activity.

In some embodiments, the apparatus further includes any one of: the initialization page further includes first question information, the first question information is configured to initiate a question for the logged-in account of the first terminal to other accounts, and the invitation information is configured to invite the target account to answer the question. The initialization page further includes resource information, the resource information is configured to invite the other accounts to receive a virtual resource, and the invitation information is configured to invite the target account to receive the virtual resource, and the initialization information further includes competitive information, the competitive information is configured to invite the other accounts to participate in a competitive activity, and the competitive information is configured to invite the target account to participate in the competitive activity.

In some embodiments, the apparatus further includes an information displaying unit, configured to display reply information of the target account in the case that the target account has answered the question.

In some embodiments, the apparatus further includes a page displaying unit, configured to perform any one of: displaying a content page of the multimedia resource in response to a trigger operation on a blank region in the initialization page, displaying the content page of the multimedia resource in the initialization page in response to a shake operation on the first terminal, and displaying the content page of the multimedia resource in the initialization page in response to a rotate operation on the first terminal.

In some embodiments, the apparatus further includes a page displaying unit, configured to automatically display the content page of the multimedia resource.

In some embodiments, the apparatus further includes a quantity displaying unit, configured to perform at least one of: displaying a quantity of accounts that have participated in the target activity in the initialization page, and displaying a quantity of accounts that have given a like to the multimedia resource in the initialization page.

In some embodiments, the quantity displaying unit is configured to perform at least one of: displaying the quantity of accounts that have participated in the target activity in the initialization page in a form of dynamic increase, and displaying the quantity of accounts that have given a like to the multimedia resource in the initialization page in a form of dynamic increase.

In some embodiments, the initialization page includes a like control, configured to give a like to the multimedia resource. The apparatus further includes a switching unit, configured to switch the like control to a resource view control in response to a trigger operation on the like control. The resource view control is designed for viewing the content page of the multimedia resource.

In some embodiments, the apparatus further includes an information displaying unit, configured to display resource prompt information in the initialization page. The resource prompt information is configured to prompt a user to view the content page of the multimedia resource.

In some embodiments, the apparatus further includes an information displaying unit, configured to display invitation success information. The invitation success information is configured to indicate that the logged-in account of the first terminal has successfully sent an invitation.

FIG. 24 is a block diagram of an apparatus for displaying resources according to an embodiment of the present disclosure. Referring to FIG. 24, the apparatus includes a receiving unit 2401 and a displaying unit 2402.

The receiving unit 2401 is configured to receive invitation information of an application from a server. The invitation information is configured to invite a target account to participate in a target activity based on the application. The invitation information is sent based on an invitation request for the target account. The invitation request is triggered based on the initialization page of the application. The initialization page displaying a multimedia resource of the target activity and a to-be-invited target account.

The displaying unit 2402 is configured to display invitation information in the application.

The technical solution according to the embodiment of the present disclosure provides an interactive method based on the multimedia resource in the initialization page, which enriches the interactive forms of the multimedia resource and improves a display effect of the multimedia resource.

In some embodiments, the receiving unit 2401 is configured to perform any one of: receiving the multimedia resource and the invitation information from the server in the case that the application has been started, receiving the invitation information from the server in response to the application having been launched and the multimedia resource being displayed in the initialization page of the application, and receiving the invitation information from the server in response to the application being in a running state. The displaying unit 2402 is configured to perform any one of: displaying the multimedia resource and the invitation information in the initialization page of the application, displaying the invitation information in response to the multimedia resource being displayed in the initialization page of the application, and displaying the invitation information in the application in a form of a prompt message.

In some embodiments, the displaying unit 2402 is configured to perform any one of: displaying question invitation information in the application, wherein the question invitation information is configured to initiate a question to the target account, displaying resource invitation information in the application, wherein the resource invitation information is configured to invite the target account to receive a virtual resource, and displaying competitive invitation information in the application, wherein the competitive invitation information is configured to invite the target account to participate in a competitive activity.

In some embodiments, the displaying unit 2402 is further configured to display reply success information in response to a reply operation on the question invitation information. The reply success information is configured to indicate that the question has been successfully answered.

In some embodiments, the displaying unit 2402 is further configured to perform any one of: displaying second question information in response to the reply operation on the question invitation information, wherein the second question information is configured to initiate a question for the target account to other accounts, displaying a resource receiving page in response to an accept operation on the resource invitation information, wherein the resource receiving page includes at least one to-be-received virtual resource, and displaying a content page of the competitive activity in response to an accept operation on the competitive invitation information.

It should be noted that the apparatus for displaying resources according to the embodiment is illustrated by example with the division of the above functional modules when displaying the resources. The functions may be allocated and implemented by different functional modules as required. That is, in terms of internal structure, the apparatus is divided into different functional modules to implement all or part of the functions described above. In addition, the embodiments of the apparatus and the method for displaying resources according to the above embodiments belong to the same concept, and the specific implementation process is detailed in the method embodiments, which is not repeated herein.

An embodiment of the present disclosure provides a computer device. The computer device includes one or more processors, and a memory configured to store a program code executable by the one or more processors. The one or more processors are configured to execute the program code to implement the method for displaying resources as described above.

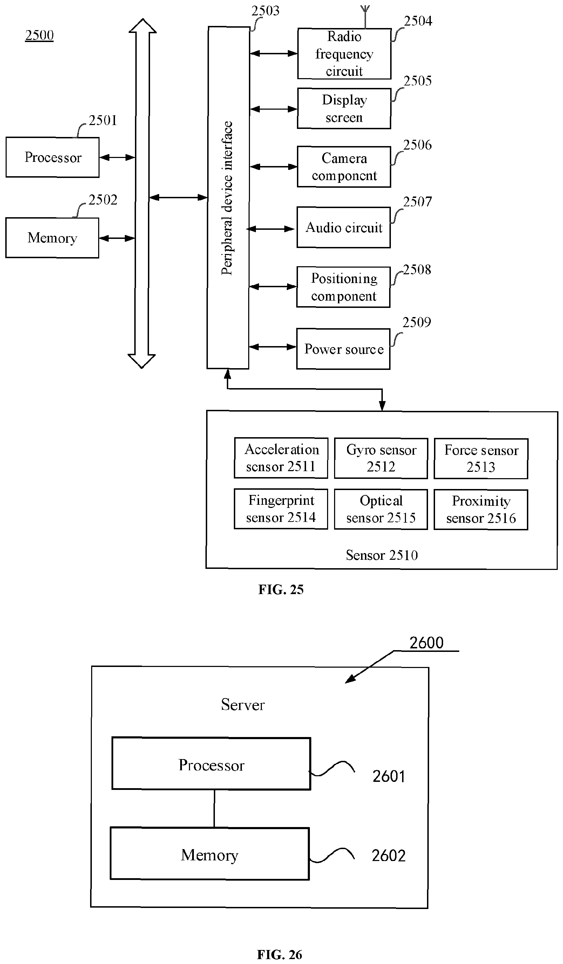

In some embodiments, a computer device involved in the embodiments of the present disclosure may be provided as a terminal. FIG. 25 is a block diagram of a terminal 2500 according to an embodiment of the present disclosure. The terminal 2500 may be a smart phone, a tablet computer, a Moving Picture Experts Group Audio Layer III (MP3) player, a Moving Picture Experts Group Audio Layer IV (MP4) player, a laptop or desk computer. In some embodiments, the terminal 2500 may also be called a user equipment (UE), a portable terminal, a laptop terminal, a desk terminal, etc.

Generally, the terminal 2500 includes a processor 2501 and a memory 2502.

The processor 2501 may include one or more processing cores, such as a 4-core processor and an 8-core processor. In some embodiments, the processor 2501 may be implemented by using at least one hardware of a digital signal processor (DSP), a field-programmable gate array (FPGA), and a programmable logic array (PLA). In some embodiments, the processor 2501 may also include a main processor and a coprocessor. The main processor is a processor configured to process the data in an awake state, and is also referred to as a central processing unit (CPU). The coprocessor is a low-power-consumption processor configured to process the data in a standby state. In some embodiments, the processor 2501 may be integrated with a graphics processing unit (GPU), which is configured to render and draw the content that needs to be displayed by a display screen. In some embodiments, the processor 2501 may further include an Artificial Intelligence (AI) processor configured to process computational operations related to machine learning.

The memory 2502 may include one or more computer-readable storage mediums, which may be non-transitory in some embodiments. In some embodiments, the memory 2502 may also include a high-speed random access memory and a non-transitory memory such as one or more disk storage devices and flash storage devices. In some embodiments, the non-transitory computer-readable storage medium in the memory 2502 is configured to store at least one program code. The at least one program code, when loaded and executed by the processor 2501, causes the processor 2051 to perform the method for displaying resources according to the method embodiments of the present disclosure.

In some embodiments, the terminal 2500 further includes a peripheral device interface 2503 and at least one peripheral device. In some embodiments, the processor 2501, the memory 2502, and the peripheral device interface 2503 may be connected via a bus or a signal line. Each peripheral device may be connected to the peripheral device interface 2503 through a bus, a signal line or a circuit board. In some embodiments, the peripheral device includes at least one of a radio frequency (RF) circuit 2504, a display screen 2505, a camera assembly 2506, an audio circuit 2507, a positioning assembly 2508 and a power source 2509.

The peripheral device interface 2503 may be configured to connect at least one peripheral device associated with an input/output (I/O) to the processor 2501 and the memory 2502. In some embodiments, the processor 2501, the memory 2502 and the peripheral device interface 2503 are integrated into the same chip or circuit board. In some embodiments, any one or two of the processor 2501, the memory 2502 and the peripheral device interface 2503 may be implemented on a separate chip or circuit board, which is not limited in the embodiments of the present disclosure.

The RF circuit 2504 is configured to receive and transmit an RF signal, which is also referred to as an electromagnetic signal. The RF circuit 2504 communicates with a communication network and other communication devices via the electromagnetic signal. The RF circuit 2504 converts the electrical signal into the electromagnetic signal for transmission, or converts the received electromagnetic signal into the electrical signal. In some embodiments, the RF circuit 2504 includes an antenna system, an RF transceiver, one or more amplifiers, a tuner, an oscillator, a digital signal processor, a codec chipset, a subscriber identity module card, and the like. In some embodiments, the RF circuit 2504 may communicate with other terminals over at least one wireless communication protocol. The wireless communication protocol includes, but is not limited to, a metropolitan area network (MAN), various generations of mobile communication networks (2G, 3G, 4G, and 5G), a wireless local area network (LAN), and a wireless fidelity (Wi-Fi) network. In some embodiments, the RF circuit 2504 may also include near-field communication (NFC) related circuits, which is not limited in the present disclosure.

The display screen 2505 is configured to display a user interface (UI). In some embodiments, the UI may include graphics, text, icons, videos, and any combination thereof. In the case that the display screen 2505 is a touch display screen, the display screen 2505 is further capable of acquiring touch signals on or over the surface of the display screen 2505. In some embodiments, the touch signal may be input into the processor 2501 as a control signal for processing. In this case, the display screen 2505 may further be configured to provide virtual buttons and/or virtual keyboards, which are also referred to as soft buttons and/or soft keyboards. In some embodiments, one display screen 2505 may be disposed on the front panel of the terminal 2500. In some other embodiments, at least two display screens 2505 may be disposed on different surfaces of the terminal 2500 or in a folded design. In further embodiments, the display screen 2505 may be a flexible display screen disposed on the curved or folded surface of the terminal 2500. Even, in some embodiments, the display screen 2505 may be further disposed in an irregular shape other than a rectangle. That is, the display screen 2505 may be an irregular-shaped screen. In some embodiments, the display screen 2505 may be made of a material such as a liquid crystal (LCD), or an organic light-emitting diode (OLED).

The camera assembly 2506 is configured to capture images or videos. In some embodiments, the camera assembly 2506 includes a front camera and a rear camera. Usually, the front camera is disposed on the front panel of the terminal, and the rear camera is disposed on the back of the terminal. In some embodiments, at least two rear cameras are disposed, and are at least one of a main camera, a depth-of-field camera, a wide-angle camera, and a telephoto camera, so as to implement a background blurring function by fusing the main camera and the depth-of-field camera, panoramic shooting and virtual reality (VR) shooting functions or other fusion shooting functions by fusing the main camera and the wide-angle camera. In some embodiments, the camera component 2506 may also include a flashlight. In some embodiments, the flashlight may be a single-color temperature flashlight or a double-color temperature flashlight. The double-color temperature flash refers to a combination of a warm flashlight and a cold flashlight and can be used for light compensation under different color temperatures.

The audio circuit 2507 may include a microphone and a speaker. The microphone is configured to capture sound waves of users and environments, and convert the sound waves into electrical signals which are input into the processor 2501 for processing, or input into the RF circuit 2504 for voice communication. In some embodiments, for the purpose of stereo acquisition or noise reduction, there may be a plurality of microphones disposed at different locations of the terminal 2500. In some embodiments, the microphone may also be an array microphone or an omnidirectional acquisition microphone. The speaker is then configured to convert the electrical signals from the processor 2501 or the RF circuit 2504 into the sound waves. In some embodiments, the speaker may be a conventional thin-film speaker or a piezoelectric ceramic speaker. In the case that the speaker is the piezoelectric ceramic speaker, the electrical signal may be converted into not only human-audible sound waves but also the sound waves which are inaudible to humans for the purpose of ranging and the like. In some embodiments, the audio circuit 2507 may also include a headphone jack.

The positioning assembly 2508 is configured to locate the current geographic location of the terminal 2500 to implement navigation or location based service (LBS). In some embodiments, the positioning assembly 2508 may be the United States' Global Positioning System (GPS), Russia's Global Navigation Satellite System (GLONASS), China's BeiDou Navigation Satellite System (BDS), and the European Union's Galileo Satellite Navigation System (Galileo).

The power source 2509 is configured to supply power to various components in the terminal 2500. In some embodiments, the power source 2509 may be an alternating current, a direct current, a disposable battery, or a rechargeable battery. In some embodiments, in the case that the power source 2509 includes the rechargeable battery, the rechargeable battery may support a wired rechargeable battery or a wireless rechargeable battery. The rechargeable battery may also be applied to the fast charging technology.

In some embodiments, the terminal 2500 also includes one or more sensors 2510. The one or more sensors 2510 include, but are not limited to, an acceleration sensor 2511, a gyro sensor 2512, a force sensor 2513, a fingerprint sensor 2514, an optical sensor 2515, and a proximity sensor 2516.

The acceleration sensor 2511 may detect accelerations on three coordinate axes of a coordinate system established by the terminal 2500. For example, the acceleration sensor 2511 may be configured to detect components of a gravitational acceleration on the three coordinate axes. The processor 2501 may control, based on a gravity acceleration signal acquired by the acceleration sensor 2511, the display screen 2505 to display the UI in a landscape view or a portrait view. The acceleration sensor 2511 may also be configured to acquire motion data of a game or a user.

The gyro sensor 2512 is configured to detect a body direction and a rotation angle of the terminal 2500. In some embodiments, the gyro sensor 2512 may cooperate with the acceleration sensor 2511 to capture a 3D motion of the user on the terminal 2500. Based on the data captured by the gyro sensor 2512, the processor 2501 may serve the following functions: motion sensing (such as changing the UI according to a user's tilt operation), image stabilization during shooting, game control and inertial navigation.

The force sensor 2513 may be disposed on a side frame of the terminal 2500 and/or a lower layer of the display screen 2505.In the case that the force sensor 2513 is disposed on a side frame of the terminal 2500, a user's holding signal to the terminal 2500 may be detected. The processor 2501 may perform left-right hand recognition or quick operation based on the holding signal acquired by the force sensor 2513. In the case that the force sensor 2513 is disposed on the lower layer of the display screen 2505, the processor 2501 controls an operable control on the UI according to a user's press operation on the display screen 2505. The operable control includes at least one of a button control, a scroll bar control, an icon control, and a menu control.

The fingerprint sensor 2514 is configured to acquire a user's fingerprint. The processor 2501 identifies the user's identity based on the fingerprint acquired by the fingerprint sensor 2514, or the fingerprint sensor 2514 identifies the user's identity based on the acquired fingerprint. In the case that the user's identity is identified as trusted, the processor 2501 authorizes the user to perform related sensitive operations, such as unlocking the screen, viewing encrypted information, downloading software, paying, and changing settings. In some embodiments, the fingerprint sensor 2514 may be provided on the front, back, or side of the terminal 2500. In the case that the terminal 2500 is provided with a physical button or a manufacturer's logo, the fingerprint sensor 2514 may be integrated with the physical button or the manufacturer's logo.

The optical sensor 2515 is configured to acquire ambient light intensity. In some embodiments, the processor 2501 may control the display brightness of the display screen 2505 based on the ambient light intensity acquired by the optical sensor 2515. In some embodiments, in the case that the ambient light intensity is high, the display brightness of the display screen 2505 is increased. In the case that the ambient light intensity is low, the display brightness of the display screen 2505 is decreased. In other embodiments, the processor 2501 may also dynamically adjust shooting parameters of the camera component 2506 based on the ambient light intensity acquired by the optical sensor 2515.

The proximity sensor 2516, also referred to as a distance sensor, is usually disposed on the front panel of the terminal 2500. The proximity sensor 2516 is configured to capture a distance between the user and a front surface of the terminal 2500. In some embodiments, when the proximity sensor 2516 detects that the distance between the user and the front surface of the terminal 2500 becomes gradually smaller, the processor 2501 controls the display screen 2505 to switch from a screen-on state to a screen-off state. When it is detected that the distance between the user and the front surface of the terminal 2500 gradually increases, the processor 2501 controls the touch display screen 2505 to switch from the screen-off state to the screen-on state.

FIG. 26 is a block diagram of a server according to an embodiment of the present disclosure. The server 2600 may vary greatly depending on different configurations or performances. The server 2600 may include one or more central processing units (CPUs) 2601 and one or more memories 2602. The one or more memories 2602 are configured to store at least one program code. The one or more processors 2601, when loading and executing the at least one program code, is caused to perform the processes performed by the server in the method for displaying resources according to the above method embodiments. In some embodiments, the server 2600 may also be provided with a wired or wireless network interface, a keyboard, an input/output interface and other components for input and output. The server 2600 may further include other components configured to implement device functions, which is not be described in detail here.

In some embodiments, a computer-readable storage medium including a program code therein, such as a memory 2602 including a program code, is further provided. The program code, when loaded and executed by a processor of a computer device, causes the computer device to perform the method for displaying resources according to the above embodiments. In some embodiments, the computer-readable storage medium may be a read-only memory (ROM), a random-access memory (RAM), a compact-disc read-only memory (CD-ROM), a magnetic tape, a floppy disk, an optical data storage device, or the like.

In some embodiments, a computer program product is further provided. The computer program product includes a computer program. A processor of a computer device, when executing the computer program, is caused to perform the method for displaying resources according to the above embodiments.

In some embodiments, the computer program according to the embodiments of the present disclosure may be loaded and run on one computer device, or loaded and run on a plurality of computer devices disposed at one site, or loaded and run on a plurality of computer devices distributed at plurality of locations and interconnected over a communication network. The plurality of computer devices distributed at a plurality of locations and interconnected over the communication network may form a blockchain system.

All the embodiments of the present disclosure may be implemented independently or in combination with other embodiments, all of which are all regarded as the protection scope claimed by the present disclosure.

## Claims

1. A method for displaying resources, **characterized by**: applicable to a first terminal, the method comprising:
displaying (201; 401) a multimedia resource of a target activity in an initialization page of an application in response to a launch operation on the application;
displaying (202; 402) a target account in the initialization page; and
sending (203; 403) an invitation request to a server based on the target account, wherein the invitation request is configured to trigger the server to send invitation information to a second terminal corresponding to the target account, and the invitation information is configured to invite the target account to participate in the target activity.

2. The method according to claim 1, wherein said displaying the target account in the initialization interface comprises:
determining, in response to a select operation on at least one account in the initialization page, a selected account as the target account, and displaying the target account.

3. The method according to claim 2, wherein said determining, in response to the select operation on the at least one account in the initialization page, the selected account as the target account comprises:
displaying, in response to a rotate operation on the first terminal, the at least one account moving with the rotate operation in the initialization page; and
determining, in response to any account being moved to a target region in the initialization page, the account as the target account, wherein the target region is a region where the selected account is disposed.

4. The method according to claim 3, wherein said determining, in response to any account being moved to the target region in the initialization page, the account as the target account comprises:
determining the account as the target account in response to a duration of the account in the target region reaching a target duration.

5. The method according to claim 2, further comprising:
displaying a target icon in the initialization page; wherein
said determining, in response to the select operation on the at least one account in the initialization page, the selected account as the target account comprises:
displaying, in response to a drag operation on the target icon, the target icon moving with the drag operation; and
determining, in response to the target icon moving to a region where any account is disposed, the account as the target account.

6. The method according to claim 5, wherein said determining, in response to the target icon moving to the region where any account is disposed, the account as the target account comprises:
determining the account as the target account in response to the region where the account is disposed being overlapped with the region where the target icon is displayed.

7. The method according to claim 2, further comprising:
displaying a target object in the initialization page, wherein the target object comprises the at least one account and a pointing control; and
said determining, in response to the select operation on the at least one account in the initialization page, the selected account as the target account comprises:
displaying the pointing control rotating along the target object in response to a long-press operation on the target object; and
determining an account pointed to by the pointing control as the target account in response to a release operation on the target object.

8. The method according to claim 1, wherein said displaying the target account in the initialization page comprises at least one of:
displaying (202; 402) the target account in the initialization page in response to a shake operation on the first terminal; and
displaying the target account in the initialization page in response to a rotate operation on the first terminal.

9. The method according to any one of claims 1 to 8, wherein
the initialization page comprises a first invitation control configured to invite the target account to participate in the target activity; and
the method further comprises:
sending the invitation request to the server based on the target account in response to a trigger operation on the first invitation control.

10. The method according to any one of claims 1 to 9, further comprising any one of:
displaying a content page of the multimedia resource in response to a trigger operation on a blank region in the initialization page;
displaying the content page of the multimedia resource in the initialization page in response to the shake operation on the first terminal; and
displaying the content page of the multimedia resource in the initialization page in response to the rotate operation on the first terminal.

11. The method according to any one of claims 1 to 9, further comprising:
automatically displaying a content page of the multimedia resource.

12. The method according to any one of claims 1 to 11, further comprising at least one of:
displaying the quantity of accounts that have participated in the target activity in the initialization page in a form of dynamic increase; and
displaying the quantity of accounts that have given a like to the multimedia resource in the initialization page in a form of dynamic increase.

13. The method according to any one of claims 1 to 12, wherein
the initialization page comprises a like control configured to give a like to the multimedia resource; and
the method further comprises:
switching the like control to a resource view control in response to a trigger operation on the like control, wherein the resource view control is designed for viewing the content page of the multimedia resource.

14. An apparatus for display resources, **characterized by** comprising:
a resource displaying unit (2301), configured to display a multimedia resource of a target activity in an initialization page of an application in response to a launch operation on the application;
an account displaying unit (2302), configured to display a target account in the initialization page; and
a sending unit (2303), configured to send an invitation request to a server based on the target account, wherein the invitation request is configured to trigger the server to send invitation information to a second terminal corresponding to the target account, and the invitation information is configured to invite the target account to participate in the target activity.

15. A non-transitory computer-readable storage medium storing a program code therein, **characterized in that** the program code, when loaded and executed by a processor of a computer device, causes the computer device to perform the method as defined in any one of claims 1 to 13.
